# EUROPÄISCHE PATENTSCHRIFT

(11) **EP 3 609 145 B1**
(45) Veröffentlichungstag und Bekanntmachung des Hinweises auf die Patenterteilung: **12.10.2022**
(21) Anmeldenummer: 19189518.4
(22) Anmeldetag: 01.08.2019
(51) Int. Cl.: H04L 12/66, H04L 47/2416, H04L 47/2491

(54) **VERFAHREN UND VORRICHTUNG UND SYSTEM ZUR ECHTZEITFÄHIGEN DATENÜBERTRAGUNG ZWISCHEN ZWEI NETZWERKEN**
METHOD AND DEVICE AND SYSTEM FOR REAL TIME CAPABLE DATA TRANSMISSION BETWEEN TWO NETWORKS
PROCÉDÉ ET DISPOSITIF ET SYSTÈME DE TRANSMISSION DE DONNÉES EN TEMPS RÉEL ENTRE DEUX RÉSEAUX

(30) Priorität: 06.08.2018 DE 102018213123
(43) Veröffentlichungstag der Anmeldung: 12.02.2020
(73) Patentinhaber: Robert Bosch GmbH, 70442 Stuttgart (DE)
(72) Erfinder: May, Gunther, 97753 Karlstadt (DE)

(56) Entgegenhaltungen:
- US-A1- 2015 103 831
- NEUMANN ARNE ET AL: "Towards integration of Industrial Ethernet with 5G mobile networks", 2018 14TH IEEE INTERNATIONAL WORKSHOP ON FACTORY COMMUNICATION SYSTEMS (WFCS), IEEE, 13. Juni 2018 (2018-06-13), Seiten 1-4, XP033369592, DOI: 10.1109/WFCS.2018.8402373 [gefunden am 2018-07-03]

## Beschreibung

### Beschreibung

Die vorliegende Erfindung betrifft ein Verfahren und eine Vorrichtung zur echtzeitfähigen Datenübertragung zwischen zwei Netzwerken sowie ein System zur echtzeitfähigen Datenübertragung.

### Stand der Technik

In der Automatisierungstechnik bzw. der industriellen Steuerungstechnik ist es üblich, Komponenten einer Maschine bzw. Anlage, insbesondere Steuereinheiten und Feldgeräte, wie z.B. elektrische Steuerungen, Antriebsregler, E/A-Geräte usw., miteinander in einem Netzwerk zu verbinden. Damit beispielsweise Bewegungen unterschiedlicher Aggregate der Maschine synchron und aufeinander abgestimmt ablaufen können, ist es von Bedeutung, dass eine Datenübertragung zwischen den einzelnen miteinander vernetzten Maschinenkomponenten in Echtzeit stattfinden kann. Echtzeitfähig bedeutet dabei, dass übertragene Daten zu einem definierbaren Zeitpunkt den erwünschten Teilnehmer erreichen oder erreicht haben. Beispielsweise werden für eine derartige Vernetzung von Industriemaschinen bzw. Maschinenkomponenten echtzeitfähige Feldbusnetzwerke eingesetzt, welche oftmals auf Ethernet basieren, z.B. Sercos III, EtherCAT, Profinet, Ethernet/IP usw.

Bei der Vernetzung von Maschinen, beispielsweise auf dem Gebiet der Automatisierungstechnik, ist mittlerweile der Begriff "Industrie 4.0" geläufig. Darunter ist die Vernetzung von Maschinen bzw. Anlagen und insbesondere auch deren Anbindung an das Internet bzw. das Internet der Dinge (sog. IoT, "Internet of Things") zu verstehen. Vernetzte Geräte können dabei Sensoren und Sicherheitskameras bis hin zu Fahrzeugen und Produktionsmaschinen sein. Beispielsweise besteht dabei die Möglichkeit, eine Maschine
über Mobilfunknetze an das Internet anzubinden und beispielsweise mit anderen Maschinen oder auch mit einem entfernten Recheneinheitensystem (sog. Cloud Computing oder Edge Computing) zu verbinden.

In NEUMANN ARNE ET AL: "Towards integration of Industrial Ethernet with 5G mobile networks", 2018 14TH IEEE INTERNATIONAL WORKSHOP ON FACTORY COMMUNICATION SYSTEMS (WFCS), IEEE, 13. Juni 2018 (2018-06-13), Seiten 1-4, XP033369592, DOI: 10.1109/WFCS.2018.8402373 werden verschiedene Szenarien beschrieben, um 5G, die fünfte Generation mobiler Netzwerke, und industrielles Ethernet zu einer hybriden Topologie zu kombinieren.

Die US 2015/103831 A1 beschreibt ein System zum Zusammenarbeiten zwischen einem ersten Echtzeit-Netzwerk und einem oder mehreren zweiten Echtzeit-Netzwerken, wobei das erste Echtzeit-Netzwerk und das eine oder die mehreren zweiten Echtzeit-Netzwerke gemäß unterschiedlichen Echtzeit-Protokollen arbeiten.

### Offenbarung der Erfindung

Vor diesem Hintergrund werden ein Verfahren und eine Vorrichtung zur echtzeitfähigen Datenübertragung zwischen zwei Netzwerken sowie ein System zur echtzeitfähigen Datenübertragung mit den Merkmalen der unabhängigen Patentansprüche vorgeschlagen. Vorteilhafte Ausgestaltungen sind Gegenstand der Unteransprüche sowie der nachfolgenden Beschreibung.

In einem ersten Netzwerk ist ein erstes echtzeitfähiges Kommunikationssystem mit einem ersten Echtzeitmechanismus zur echtzeitfähigen Datenübertragung eingerichtet. In einem zweiten Netzwerk ist ein zweites echtzeitfähiges Kommunikationssystem mit einem zweiten Echtzeitmechanismus zur echtzeitfähigen Datenübertragung eingerichtet. Durch das jeweilige echtzeitfähige Kommunikationssystem wird es in dem jeweiligen Netzwerk ermöglicht, dass eine entsprechende Echtzeitbedingung erfüllt ist und dass übertragene Datenpakete in dem jeweiligen Netzwerk zu einem definierbaren Zeitpunkt bzw. innerhalb eines definierbaren Zeitraums garantiert den erwünschten Teilnehmer erreichen oder erreicht haben. Unter einem Echtzeitmechanismus zur echtzeitfähigen Datenübertragung seien in diesem Zusammenhang insbesondere Mechanismen bzw. Maßnahmen bzw. Protokolle zu verstehen, die in dem jeweiligen Netzwerk bzw. dem jeweiligen Kommunikationssystem implementiert sind, so dass innerhalb des jeweiligen Netzwerks eine vorgegebene Echtzeitbedingung eingehalten werden kann.

Das erste und das zweite echtzeitfähige Kommunikationssystem und ferner der erste und der zweite Echtzeitmechanismus sind voneinander verschieden. Innerhalb der Netzwerke kann durch das jeweilige Kommunikationssystem bzw. durch den jeweiligen Echtzeitmechanismus eine echtzeitfähige Datenübertragung gewährleistet werden, aber zwischen den beiden Netzwerken ist dies herkömmlicherweise nicht möglich.

Im Rahmen der vorliegenden Erfindung wird nun eine echtzeitfähige Übertragung von Daten auch zwischen den beiden Netzwerken ermöglicht. Zu diesem Zweck sind das erste Netzwerk und das zweite Netzwerk über ein Abbildungsmodul miteinander verbunden, welches den ersten Echtzeitmechanismus des ersten echtzeitfähigen Kommunikationssystems und den zweiten Echtzeitmechanismus des zweiten echtzeitfähigen Kommunikationssystems wechselseitig aufeinander abbildet.

Zur echtzeitfähigen Datenübertragung von einem der beiden Netzwerke in das andere der beiden Netzwerke wird ein Datenpaket in dem einen der beiden Netzwerke gemäß dem Echtzeitmechanismus des in diesem Netzwerk eingerichteten echtzeitfähigen Kommunikationssystems gesendet und von dem Abbildungsmodul empfangen. Das Abbildungsmodul bildet diesen Echtzeitmechanismus auf den Echtzeitmechanismus des in dem anderen der beiden Netzwerke eingerichteten echtzeitfähigen Kommunikationssystems ab. Das Datenpaket wird an das andere der beiden Netzwerke gemäß dem Echtzeitmechanismus des in diesem Netzwerk eingerichteten echtzeitfähigen Kommunikationssystems übertragen.

Insbesondere sind die Echtzeitmechanismen jeweils als sog. Quality-of-Service Mechanismen zu verstehen, welche gewährleisten, dass eine Datenübertragung in dem jeweiligen Netzwerk bzw. Kommunikationssystem eine vorgegebene Güte (Quality of Service, QoS) einhalten und die vorgegebene Echtzeitbedingung erfüllen kann. Echtzeitmechanismen können insbesondere zu übermittelnde Datenpakete oder deren Eigenschaften betreffen und insbesondere derart charakterisieren bzw. spezifizieren, dass diese priorisiert und in Echtzeit übertragen werden können. Alternativ oder zusätzlich können Echtzeitmechanismen auch das Netzwerk und/oder die in dem Netzwerk miteinander vernetzen Teilnehmer bzw. Eigenschaften des Netzwerks und/oder seiner Teilnehmer betreffen und insbesondere in dem Netzwerk Bedingungen schaffen, damit in dem Netzwerk einer Datenübertragung in Echtzeit ermöglicht wird.

Insbesondere dienen der erste und der zweite Echtzeitmechanismus jeweils demselben Zweck, sind jedoch in den beiden Netzwerken jeweils auf unterschiedliche netzwerkspezifische Weisen realisiert, beispielsweise gemäß unterschiedlichen Protokollen, Standards oder Normen. Somit unterscheiden sich also das erste und das zweite Kommunikationssystem und ferner der erste und der zweite Echtzeitmechanismus voneinander. In jedem dieser beiden Netzwerke sind somit jeweils individuelle, netzwerkspezifische Mechanismen implementiert, um in dem jeweiligen Netzwerk eine echtzeitfähige Datenübertragung zu ermöglichen. Da sich der erste und der zweite Echtzeitmechanismus jedoch voneinander unterscheiden, können diese beiden Mechanismen herkömmlicherweise nicht oder zumindest nicht ohne weiteres für eine echtzeitfähige Datenübertragung zwischen den beiden Netzwerken verwendet werden, so dass herkömmlicherweise nicht möglich ist, Daten in Echtzeit von einem Teilnehmer in dem einen zu einem Teilnehmer in dem anderen Netzwerk zu übertragen.

Das Abbildungsmodul ermöglicht nun eine Abbildung bzw. Übersetzung der unterschiedlichen netzwerkspezifischen Weisen, auf welche von dem ersten und dem zweiten Echtzeitmechanismus jeweils derselbe Zweck erzielt wird. Zweckmäßigerweise transformiert bzw. übersetzt das Abbildungsmodul Protokolle, Standards oder Normen ineinander, gemäß welchen der erste bzw. der zweite Echtzeitmechanismus in dem jeweiligen Netzwerk realisiert sind. Somit wird durch das Abbildungsmodul eine netzwerkübergreifende, echtzeitfähige Datenübertragung ermöglicht, unabhängig von den in den einzelnen Netzwerken verwendeten Echtzeitmechanismen bzw. Protokollen, Standards und Normen zur Datenübertragung in Echtzeit.

Durch das Abbildungsmodul werden insbesondere Datenpakete, Datenströme bzw. deren Protokolle beim Übergang zwischen den zwei Netzwerken derart übersetzt, dass die in dem einen der beiden Netzwerke festgelegten bzw. signalisierten Echtzeitbindungen in das andere Netzwerk "vererbt" und auch dort realisiert werden können. Über beide Netzwerke hinweg können somit durchgehende Echtzeitbedingungen festgelegt werden, die von Applikation in den beiden Netzwerken genutzt werden können.

Vorteilhafterweise betreffen der erste Echtzeitmechanismus und der zweite Echtzeitmechanismus jeweils eine Priorisierung von Datenpaketen (sog. Priorisierungsmechanismen). Durch derartige Priorisierung von Datenpaketen kann in Situationen mit erhöhter Last echtzeitkritischen, höher priorisierten Datenpaketen Vorrang gewährt werden. Jedoch unterscheidet sich in verschiedenen Echtzeitmechanismen bzw. Priorisierungsmechanismen oftmals, wie Datenpakten eine entsprechende Priorität zugeordnet werden kann. Beispielsweise kann in einem der beiden Echtzeitmechanismen ein spezieller Identifier (z.B. ein sog. QoS Flow Identifier, QFI) genutzt werden, wobei Datenpakete mit jeweils gleichem Identifier einheitlich mit gleicher Priorität behandelt werden. In dem anderen der beiden Echtzeitmechanismen können beispielsweise Prioritäten auf Basis von speziellen Adressen oder Tags festgelegt werden, etwa MAC-Adressen und VLAN-Tags, welche primär zwar anderen Zwecken dienen, aber ein Bezug zu einer konkreter Priorität zusätzlich konfiguriert wird. Das Abbildungsmodul ermöglicht es nun, derartig verschiedene Priorisierungen von Datenpaketen aufeinander abzubilden bzw. zu übersetzen, so dass mittels des einen der beiden Echtzeitmechanismen festgelegte Prioritäten auch für den anderen der beiden Echtzeitmechanismen gelten.

Alternativ oder zusätzlich betreffen der erste Echtzeitmechanismus und der zweite Echtzeitmechanismus vorteilhafterweise jeweils eine Synchronisation von Netzwerkteilnehmern (sog. Synchronisationsmechanismen). Mittels derartiger Echtzeitmechanismen bzw. Synchronisationsmechanismen wird in dem jeweiligen Netzwerk zweckmäßigerweise eine gemeinsame Zeitbasis geschaffen. Durch das Abbildungsmodul wird zweckmäßigerweise eine Synchronisation an der Übergangsstelle der beiden Netzwerke ermöglicht, so dass in beiden Netzwerken dieselbe gemeinsame Zeitbasis verwendet wird.

Erfindungsgemäß betreffen der erste Echtzeitmechanismus und der zweite Echtzeitmechanismus jeweils eine Allokation von Datenübertragungskapazitäten, beispielsweise in Form von zyklisch reservierten Zeitschlitzen. Je nach Echtzeitmechanismus können derartige Allokationen variieren, beispielsweise können Zeitschlitze je nach Echtzeitmechanismus verschieden lang sein oder die Reservierungen einzelner Zeitschlitze können sich je nach Echtzeitmechanismus unterscheiden. Durch das Abbildungsmodul werden Allokationen des einen Netzwerks, nämlich Länge und Reservierung der einzelnen Zeitschlitze, auf das andere Netzwerk übertragen.

Vorteilhafterweise bildet das Abbildungsmodul zur echtzeitfähigen Datenübertragung von dem einen der beiden Netzwerke in das andere der beiden Netzwerke Einstellungen des in dem einen der beiden Netzwerke gesendeten Datenpakets gemäß dem Echtzeitmechanismus des in diesem Netzwerk eingerichteten echtzeitfähigen Kommunikationssystems in Einstellungen gemäß dem Echtzeitmechanismus des in dem anderen der beiden Netzwerke eingerichteten echtzeitfähigen Kommunikationssystems ab. Das Datenpaket hat insbesondere spezielle echtzeitbezogene Einstellungen bzw. Konfigurationen, welche dem Datenpaket gemäß dem entsprechenden netzwerkspezifischen Echtzeitmechanismus in dem Netzwerk, in welchem das Datenpaket ausgesendet wird, zugewiesen werden, beispielsweise eine spezielle zugewiesene Priorität. Das Abbildungsmodul übersetzt diese Einstellungen bzw. Konfigurationen des Datenpakets, so dass diese übersetzten Eigenschaften mittels des netzwerkspezifischen

Echtzeitmechanismus des Zielnetzwerks verstanden werden können. Insbesondere kann auf diese Weise eine Priorisierung von Datenpaketen übersetzt werden. Beispielsweise kann das Abbildungsmodul die in einem entsprechenden Identifier (z.B. QoS Flow Identifier, QFI) festgelegte Priorität in entsprechende Adressen oder Tags (MAC-Adressen, VLAN-Tags) übertragen und umgekehrt.

Vorzugsweise überträgt das Abbildungsmodul zur echtzeitfähigen Datenübertragung von dem einen der beiden Netzwerke in das andere der beiden Netzwerke Einstellungen in dem einen der beiden Netzwerke gemäß dem Echtzeitmechanismus des in diesem Netzwerk eingerichteten echtzeitfähigen Kommunikationssystems auf das andere der beiden Netzwerke gemäß dem Echtzeitmechanismus des in diesem Netzwerk eingerichteten echtzeitfähigen Kommunikationssystems. Das eine der beiden Netzwerke fungiert dabei zweckmäßigerweise als ein Master bzw. übergeordnetes Netzwerk, dessen Einstellungen in dem anderen Netzwerk, welches insbesondere als Slave bzw. untergeordnetes Netzwerk fungiert, übernommen werden. Echtzeitbezogene Einstellungen bzw. Konfigurationen der Netzwerke werden durch das Abbildungsmodul somit an der Übergangsstelle zwischen den Netzwerken zweckmäßigerweise aufeinander abgestimmt bzw. miteinander synchronisiert. Beispielsweise können diese Einstellungen die Zeitbasis der Netzwerke betreffen, so dass eine gemeinsamen Zeitbasis des einen Netzwerks auf das andere übertragen werden kann und dass beide Netzwerke dieselbe gemeinsame Zeitbasis besitzen. Alternativ oder zusätzlich können die Einstellungen beispielsweise die Allokation von Übertragungskapazitäten betreffen, so dass in beiden Netzwerken gleich lange und entsprechend reservierte Zeitschlitze definiert werden.

Bevorzugt ist das erste Netzwerk über eine erste Schnittstelle mit dem Abbildungsmodul verbunden, wobei das Abbildungsmodul über die erste Schnittstelle Einstellungen gemäß dem ersten Echtzeitmechanismus einlesen und ausgeben kann. Alternativ oder zusätzlich ist das zweite Netzwerk bevorzugt über eine zweite Schnittstelle mit dem Abbildungsmodul verbunden, wobei das Abbildungsmodul über die zweite Schnittstelle Einstellungen gemäß dem zweiten Echtzeitmechanismus einlesen und ausgeben kann. Insbesondere kann das Abbildungsmodul über diese Schnittstellen somit Einstellungen in dem einen der beiden Netzwerke einlesen und auf das andere der beiden Netzwerke übertagen. Ferner kann das Abbildungsmodul über diese Schnittstellen zweckmäßigerweise Einstellungen des Datenpakets einlesen und entsprechend ändern bzw. abbilden.

Besonders vorteilhaft wird es durch die Erfindung ermöglicht, Maschinen bzw. Anlagen im Zuge der sog. "Industrie 4.0" miteinander zu vernetzen und insbesondere an das Internet bzw. das Internet der Dinge (sog. loT, "Internet of Things") anzubinden. Komponenten der Maschine, insbesondere Steuereinheiten und Feldgeräte, wie z.B. elektrische Steuerungen, Antriebsregler, E/A-Geräte usw., können dabei miteinander in einem der beiden Netzwerke verbunden sein, ohne Beschränkung der Allgemeinheit beispielsweise in dem ersten Netzwerk. Zu diesem Zweck kann als entsprechendes echtzeitfähiges Kommunikationssystem ein ethernetbasiertes Kommunikationssystem und/oder ein echtzeitfähiger Feldbus verwendet werden, z.B. Sercos III, EtherCAT, Profinet, Ethernet/IP usw.

Durch das Abbildungsmodul kann diese Maschine nun beispielsweise mit einer weiteren Maschine direkt vernetzt werden, deren Komponenten in dem anderen der beiden Netzwerke miteinander verbunden sind, ohne Beschränkung der Allgemeinheit beispielsweise in dem zweiten Netzwerk, in welchem zweckmäßigerweise ein anderes echtzeitfähiges Kommunikationssystem verwendet wird als in dem ersten Netzwerk.

Besonders vorteilhaft kann die Maschine an das Internet bzw. das Internet der Dinge angebunden werden, welches ohne Beschränkung der Allgemeinheit beispielsweise das zweite Netzwerk darstellt. Echtzeitmechanismen von Kommunikationssystemen der Automatisierungstechnik bzw. der industriellen Steuerungstechnik, etwa von echtzeitfähigen Feldbussen, unterscheiden sich insbesondere teils deutlich von Echtzeitmechanismen echtzeitfähiger Internetanbindungen, so dass es herkömmlicherweise nicht ohne weiteres möglich ist, echtzeitkritische Funktionen von Maschinen über das Internet anzubinden. Durch das Abbildungsmodul wird dies nun ermöglicht, so dass die Maschine über das Internet zweckmäßigerweise mit weiteren Maschinen oder auch mit einem entfernten Recheneinheitensystem (sog. Cloud Computing oder Edge Computing) verbunden werden und in Echtzeit kommunizieren kann. Beispielsweise können somit Steuerungs- bzw. Regelungskreise über Cloud- bzw. Edge-Computing geschlossen werden.

Vorteilhafterweise basiert das erste echtzeitfähige Kommunikationssystem und/oder das zweite echtzeitfähige Kommunikationssystem, ohne Beschränkung der Allgemeinheit vorzugsweise das erste echtzeitfähige Kommunikationssystem, auf Ethernet und/oder auf IEEE802-Standards und/oder auf TSN-Standards. Das erste echtzeitfähige Kommunikationssystem dient dabei zweckmäßigerweise zur Vernetzung von Komponenten einer Maschine der Automatisierungstechnik. Zweckmäßigerweise ist das erste echtzeitfähige Kommunikationssystem ein auf Ethernet basierender echtzeitfähiger Feldbus, z.B. Sercos III, EtherCAT, Profinet, Ethernet/IP usw. IEEE 802 beinhaltet eine Reihe von Normen bzw. Standards im Bereich lokaler, insbesondere kabelgebundener Netzwerke, insbesondere Ethernet-Netzwerke. "Time Sensitive Networking" (TSN) stellt eine Reihe von Standards bzw. Normen dar, welche sich unter anderem mit der Synchronisation von Netzwerkteilnehmern in einem Netzwerk befassen, insbesondere um Echtzeitanforderungen zu erfüllen, insbesondere bei Datenübertragung über Ethernet. TSN-Standards gewinnen im Zuge der Industrie 4.0 immer mehr an Bedeutung.

Vorzugsweise ist das erste echtzeitfähige Kommunikationssystem und/oder das zweite echtzeitfähige Kommunikationssystem, ohne Beschränkung der Allgemeinheit vorzugsweise das zweite erste echtzeitfähige Kommunikationssystem, ein echtzeitfähiges Mobilfunknetz und/oder basiert auf 5G-Standards. 5G ist nach UMTS (3G) und LTE (4G) die fünfte Generation der sog. 'Next Generation Mobile Networks' (kurz NGMN), einem Projekt von Mobilfunkfirmen und Mobilfunkausrüstern zur Entwicklung von Mobilfunkgenerationen. 5G baut auf seinem direkten Vorgänger 4G auf, besitzt im Vergleich zu diesem jedoch erhebliche Verbesserungen, insbesondere ein deutlich verbessertes Echtzeitverhalten.

Gemäß einer besonders vorteilhaften Ausgestaltung der Erfindung bildet das Abbildungsmodul den ersten Echtzeitmechanismus basierend auf TSN-Standards und den zweiten Echtzeitmechanismus basierend auf 5G-Standards wechselseitig aufeinander ab. Kommunikationssysteme basierend auf TSN- und 5G-Standards besitzen jeweils spezifische Echtzeitmechanismen, insbesondere QoS-Mechanismen, die Datenübertragung in Echtzeit ermöglichen, die sich jedoch teilweise deutlich voneinander unterscheiden. Das Abbildungsmodul bietet somit die Möglichkeit, die Echtzeitmechanismen nach TSN- und 5G-Standards ineinander zu übersetzen bzw. ineinander umzurechnen, wodurch besonders vorteilhaft Echtzeiteigenschaften zwischen einem Ethernet-basierten Echtzeitsystem und einem 5G-Mobilfunksystem miteinander kompatibel gemacht werden. Somit wird es besonders vorteilhaft ermöglicht, eine Maschine mit einem auf Ethernet bzw. TSN-Standards basierendem Netzwerk an ein 5G-Mobilfunknetz in Echtzeit anzubinden, insbesondere im Zuge der "Industrie 4.0".

Die Erfindung eignet sich dabei in vorteilhafter Weise für eine weite Bandbreite von Maschinen und Applikationen, beispielsweise für Tunnelbohrmaschinen, Hydraulik-Stanzen/Pressen, allgemeine Automatisierungen, Semiconductor-Handling, Robotik usw. Vorteilhaft eignet sich die Erfindung für Werkzeugmaschinen, wie beispielsweise ein Schweißsystem, ein Schraubsystem, eine Drahtsäge oder eine Fräsmaschine, für Bahnbearbeitungsmaschinen, wie z.B. eine Druckmaschine, eine Zeitungsdruckmaschine, eine Tiefdruck-, Siebdruckmaschine, eine Inline-Flexodruckmaschine oder eine Verpackungsmaschine ausgebildet sein, oder auch für (Band-) Anlagen zur Herstellung eines Automobils oder zur Herstellung von Komponenten eines Automobils (z.B. Verbrennungsmotoren oder Steuergeräte).

Eine erfindungsgemäße Vorrichtung, z.B. ein Router, ist, insbesondere programm- und/oder hatdwaretechnisch, dazu eingerichtet, ein erfindungsgemäßes Verfahren durchzuführen. Vorteile und bevorzugte Ausgestaltungen der erfindungsgemäßen Vorrichtung und des erfindungsgemäßen Verfahrens ergeben sich aus der vorliegenden Beschreibung in analoger Art und Weise.

Die Vorrichtung weist eine erste Schnittstelle auf, die dazu eingerichtet ist, mit einem ersten Netzwerk verbunden zu werden, in welchem ein erstes echtzeitfähiges Kommunikationssystem mit einem ersten Echtzeitmechanismus zur echtzeitfähigen Datenübertragung eingerichtet ist. Eine zweite Schnittstelle ist dazu eingerichtet mit einem zweiten Netzwerk verbunden zu werden, in welchem ein zweites echtzeitfähiges Kommunikationssystem mit einem zweiten Echtzeitmechanismus zur echtzeitfähigen Datenübertragung eingerichtet ist. Die Vorrichtung weist ferner ein Abbildungsmodul auf, dazu eingerichtet den ersten Echtzeitmechanismus des ersten echtzeitfähigen Kommunikationssystems und den zweiten Echtzeitmechanismus des zweiten echtzeitfähigen Kommunikationssystems wechselseitig aufeinander abzubilden.

Die Vorrichtung ist zweckmäßigerweise als ein Router bzw. als eine Schnittstelle zwischen den beiden Netzwerken ausgebildet. Ferner kann die Vorrichtung bzw. der Router noch weitere zweckmäßige Elemente aufweisen, beispielsweise einen Verteiler bzw. Switch und/oder ein Modem eines oder beider Netzwerke. Bevorzugt weist die Vorrichtung bzw. der Router eine TSN-Echtzeit-Routing-Einheit, etwa einen TSN-Verteiler bzw. TSN-Switch auf, für ein auf TSN-Standards basierendes echtzeitfähiges Kommunikationssystem. Weiter bevorzugt weist die Vorrichtung bzw. der Router ein 5G-Modem auf, für ein auf 5G-Standards basierendes echtzeitfähiges Kommunikationssystem.

Ferner betrifft die Erfindung ein System zur echtzeitfähigen Datenübertragung aufweisend ein erstes Netzwerk mit wenigstens einem ersten Netzwerkteilnehmer, wobei in dem ersten Netzwerk ein erstes echtzeitfähiges Kommunikationssystem mit einem ersten Echtzeitmechanismus zur echtzeitfähigen Datenübertragung eingerichtet ist, und ferner aufweisend ein zweites Netzwerk mit wenigstens einem zweiten Netzwerkteilnehmer, wobei in dem zweiten Netzwerk ein zweites echtzeitfähiges Kommunikationssystem mit einem zweiten Echtzeitmechanismus zur echtzeitfähigen Datenübertragung eingerichtet ist. Das erste Netzwerk und das zweite Netzwerk sind mittels einer bevorzugten Ausgestaltung einer erfindungsgemäßen Vorrichtung miteinander verbunden.

Eines der beiden Kommunikationssysteme, ohne Beschränkung der Allgemeinheit beispielsweise das erste Kommunikationssystem, basiert vorteilhafterweise auf TSN-Standards, und das andere der beiden Kommunikationssysteme, ohne Beschränkung der Allgemeinheit beispielsweise das zweite Kommunikationssystem, basiert vorteilhafterweise auf 5G-Standards. Das System stellt somit besonders vorteilhaft eine über Ethernet bzw. TSN-Standards vernetze Maschine dar, welche an das Internet über ein 5G-Mobilfunketz angebunden ist und dort beispielsweise mit einem entfernten Recheneinheitensystem vernetzt ist, beispielsweise im Zuge des Cloud- bzw. Edge-Computing, insbesondere im Zuge der sog. "Industrie 4.0".

Gemäß einer bevorzugen Ausgestaltung umfasst das System zur echtzeitfähigen Datenübertragung ein erstes Netzwerk, in welchem ein erstes echtzeitfähiges Kommunikationssystem mit einem ersten Echtzeitmechanismus zur echtzeitfähigen Datenübertragung eingerichtet ist, ein zweites Netzwerk, in welchem ein zweites echtzeitfähiges Kommunikationssystem mit einem zweiten Echtzeitmechanismus zur echtzeitfähigen Datenübertragung eingerichtet ist, und ein drittes Netzwerk, in welchem das erste echtzeitfähige Kommunikationssystem mit dem ersten Echtzeitmechanismus zur echtzeitfähigen Datenübertragung oder ein drittes echtzeitfähiges Kommunikationssystem mit dem dritten Echtzeitmechanismus zur echtzeitfähigen Datenübertragung eingerichtet ist. Das erste Netzwerk und das zweite Netzwerk sind mittels einer ersten bevorzugten Ausgestaltung einer erfindungsgemäßen Vorrichtung miteinander verbunden. Mittels einer zweiten bevorzugten Ausgestaltung einer erfindungsgemäßen Vorrichtung sind das zweite Netzwerk und das dritte Netzwerk miteinander verbunden.

Vorteilhafterweise ist auch in dem dritten Netzwerk das erste echtzeitfähige Kommunikationssystem eingerichtet, welches vorzugsweise auf TSN-Standards basiert. Das zweite Kommunikationssystem basiert vorteilhafterweise auf 5G-Standards. Das erste und das dritte Netzwerk dienen insbesondere jeweils zur Vernetzung einer Maschine. Diese beiden Maschinen sind zweckmäßigerweise über das Internet mittels einem 5G-Mobilfunketz miteinander vernetzt, insbesondere im Zuge der sog. "Industrie 4.0".

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch ein System zur echtzeitfähigen Datenübertragung zwischen zwei Netzwerken mit einer bevorzugten Ausgestaltung einer erfindungsgemäßen Vorrichtung, die dazu eingerichtet ist, eine bevorzugte Ausführungsform eines erfindungsgemäßen Verfahrens durchzuführen.

- Figur 2: zeigt schematisch eine bevorzugte Ausführungsform eines erfindungsgemäßen Verfahrens als ein Blockdiagramm.
- Figur 3: zeigt schematisch ein System zur echtzeitfähigen Datenübertragung zwischen drei Netzwerken mit bevorzugten Ausgestaltungen einer erfindungsgemäßen Vorrichtung, die jeweils dazu eingerichtet sind, eine bevorzugte Ausführungsform eines erfindungsgemäßen Verfahrens durchzuführen.

### Detaillierte Beschreibung der Zeichnung

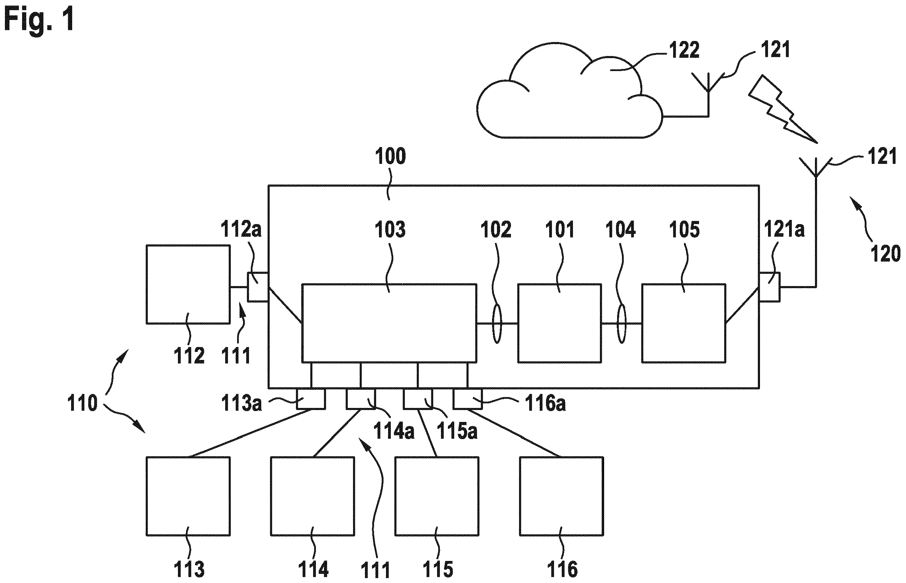

In Figur 1 ist ein System zur echtzeitfähigen Datenübertragung zwischen zwei Netzwerken schematisch dargestellt.

In einem ersten Netzwerke 110 sind Komponenten einer Maschine im Zuge der Automatisierungstechnik bzw. der industriellen Steuerungstechnik miteinander vernetzt, beispielsweise ein Steuergerät 112, Aktoren 113, 114 und Sensoren 115, 116. Es versteht sich, dass die Maschine noch weiter Komponenten aufweisen kann, die der Übersichtlichkeit halber nicht dargestellt sind.

Diese Maschinenkomponenten 112, 113, 114, 115, 116 sind in dem ersten Netzwerk über ein erstes echtzeitfähiges Kommunikationssystem 111 vernetzt, welches auf Ethernet, IEEE-Standards und ferner vorzugsweise auf TSN-Standards basiert. Beispielsweise ist das erste echtzeitfähige Kommunikationssystem 111 ein auf Ethernet basierender echtzeitfähiger Feldbus, z.B. Sercos III, EtherCAT, Profinet, Ethernet/IP usw.

Im Zuge der "Industrie 4.0" soll die Maschine bzw. das erste Netzwerk 110 an das Internet bzw. das Internet der Dinge (sog. loT, "Internet of Things") angebunden werden und beispielsweise mit einem entfernten Recheneinheitensystem zum sog. Cloud Computing bzw. Edge Computing verbunden werden.

Ein entsprechendes entferntes Recheneinheitensystem 122 (z.B. bei einem Hersteller, Wartungsunternehmen, Leitzentrale usw.)ist in einem zweiten Netzwerk 120 vorgesehen. In diesem zweiten Netzwerk 120 ist ein zweites echtzeitfähiges Kommunikationssystem 121 vorgesehen, welches auf 5G-Standards basiert und als ein 5G-Mobilfunknetz ausgebildet ist. Der Feldbus 111 bzw. das erste Kommunikationssystem 111 weist erste Echtzeitmechanismen zur echtzeitfähigen Datenübertragung auf, so dass innerhalb des ersten Netzwerks 110 eine Datenübertragung in Echtzeit möglich ist.

Ebenso weist das 5G-Mobilfunknetz 121 bzw. das zweite Kommunikationssystem 121 zweite Echtzeitmechanismen zur echtzeitfähigen Datenübertragung auf, so dass auch innerhalb des zweiten Netzwerks 120 eine Datenübertragung in Echtzeit möglich ist.

Erfindungsgemäß betreffen diese Echtzeitmechanismen jeweils eine Allokation von Datenübertragungskapazitäten. Ferner können diese Echtzeitmechanismen jeweils eine Priorisierung von Datenpaketen und/oder eine Synchronisation von Netzwerkteilnehmern betreffen.

Diese ersten und zweiten Echtzeitmechanismen dienen zwar jeweils demselben Zweck, sind jedoch auf unterschiedliche Weisen im jeweiligen Netzwerk implementiert, beispielsweise auf unterschiedlichen Standards und Protokollen basierend. Eine echtzeitfähige Datenübertragung zwischen den zwei Netzwerken 110, 120 ist daher ohne weiteres herkömmlicherweise nicht möglich.

Um nun dennoch eine echtzeitfähige Datenübertragung zwischen den Netzwerken 110, 120 zu ermöglichen, ist eine bevorzugte Ausgestaltung einer erfindungsgemäßen Vorrichtung 100 vorgesehen, welche beispielsweise als ein Router ausgebildet ist.

Der Router 100 weist ein Abbildungsmodul 101 auf, das dazu eingerichtet ist, den ersten Echtzeitmechanismus des ersten echtzeitfähigen Kommunikationssystems 111 und den zweiten Echtzeitmechanismus des zweiten echtzeitfähigen Kommunikationssystems 121 wechselseitig aufeinander abzubilden.

Ferner weist der Router 100 eine erste Schnittstelle 102 auf, über welche das Abbildungsmodul 101 mit dem ersten Netzwerk 110 verbunden ist und die ferner dazu eingerichtet ist, dass das Abbildungsmodul 101 Einstellungen gemäß dem ersten Echtzeitmechanismus einlesen und ausgeben kann. Eine zweite Schnittstelle 104 ist vorgesehen, um das Abbildungsmodul 101 mit dem zweiten Netzwerk 120 zu verbinden. Diese ist ferner dazu eingerichtet, dass das Abbildungsmodul 101 Einstellungen gemäß dem zweiten Echtzeitmechanismus einlesen und ausgeben kann.

Der Router 100 kann ferner einen Verteiler bzw. Switch 103 für das erste Netzwerk 110 aufweisen, beispielsweise in Form einer TSN-Echtzeit-Routing-Einheit bzw. eines TSN-Switches. An entsprechenden Anschlüssen bzw. Ports 112a, 113a, 114a, 115a, 116a des TSN-Switches 103 können die Maschinenkomponenten 112, 113, 114, 115, 116 angeschlossen und somit miteinander verbunden werden.

Ferner weist der Router 100 beispielsweise eine 5G-Modem 105 auf. Über einen entsprechenden Anschluss bzw. Port 121a kann sich das Modem 105 mit dem 5G-Mobilfunknetz verbinden.

Der Router 100 ermöglicht nun eine Datenübertragung in Echtzeit zwischen der Maschine, insbesondere dem Steuergerät 112, in dem ersten Netzwerk 110 und dem entfernten Recheneinheitensystem 122 in dem zweiten Netzwerk 120, so dass beispielsweise im Zuge der "Industrie 4.0" Steuerungs- bzw. Regelungskreise der Maschine über das entfernte Recheneinheitensystem 122 geschlossen werden können.

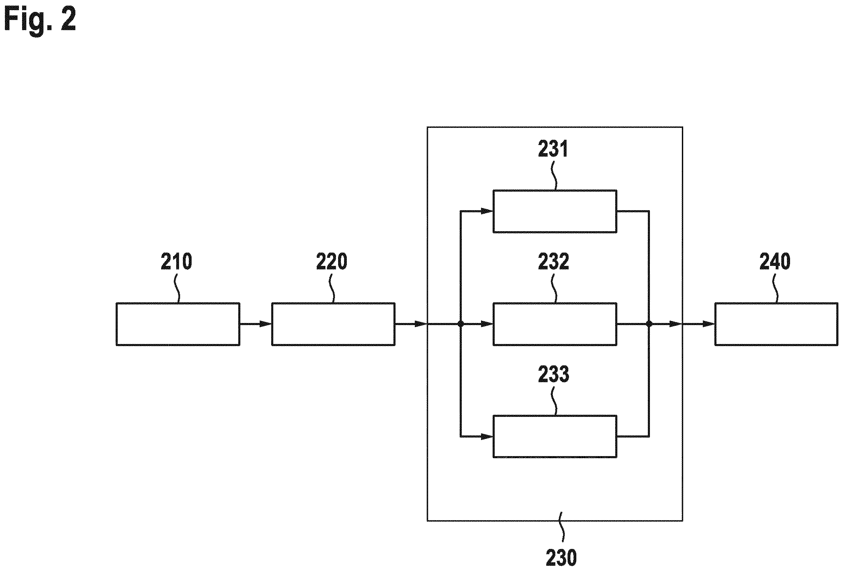

Zu diesem Zweck ist der Router 100 insbesondere programmtechnisch dazu eingerichtet, eine bevorzugte Ausführungsform eines erfindungsgemäßen Verfahrens durchzuführen, welche in Figur 2 schematisch als ein Blockdiagramm dargestellt ist und nachfolgend in Bezug auf die Figuren 1 und 2 erläutert wird.

Beispielsweise werden im Zuge einer Regelung der Maschine von dem Steuergerät 112 Sensorwerte der Sensoren 115, 116 in Echtzeit an das entfernte Recheneinheitensystem 122übermittelt, wo in Abhängigkeit von diesen Sensorwerten Ansteuerwerte bestimmt werden, die wiederum von dem entfernten Recheneinheitensystem 122 in Echtzeit an das Steuergerät 112 übermittelt werden, damit das Steuergerät 112 gemäß diesen Ansteuerwerten die Aktoren 113, 114 ansteuert.

Im Folgenden wird beispielhaft der Fall betrachtet, dass von dem Steuergerät 112 Sensorwerte in einem Datenpaket in Echtzeit an das entfernte Recheneinheitensystem 122 übertragen werden.

In einem Schritt 210 werden in dem ersten Netzwerk 110 zunächst spezielle Einstellungen gemäß dem Echtzeitmechanismus des Kommunikationssystems 111 vorgenommen, insbesondere werden die Netzwerkteilnehmer 112, 113, 114, 115, 116 des ersten Netzwerks 110 dabei synchronisiert und es wird eine gemeinsame Zeitbasis geschaffen. Ferner werden zur Allokation von Datenübertragungskapazitäten Zeitschlitze definiert und reserviert.

Das Steuergerät 112 sendet in Schritt 220 in dem ersten Netzwerk 110 das entsprechende Datenpaket und teilt diesem Datenpaket spezielle Einstellungen gemäß dem ersten Echtzeitmechanismus des ersten Kommunikationssystems 111 zu, insbesondere eine spezielle Priorität.

In Schritt 230 bildet das Abbildungsmodul 101 den Echtzeitmechanismus des Feldbusses bzw. des ersten Kommunikationssystems 111 auf den zweiten Echtzeitmechanismus des 5G-Mobilfunketzes bzw. des zweiten Kommunikationssystems 121 ab.

Zu diesem Zeck bildet das Abbildungsmodul 101 in Schritt 231 die Echtzeitmechanismen betreffend der Priorisierung des Datenpakets aufeinander ab. Dabei bildet das Abbildungsmodul 101 die entsprechenden Einstellungen bezüglich der Priorität gemäß dem ersten Echtzeitmechanismus in Einstellungen gemäß dem zweiten Echtzeitmechanismus ab.

Der erste Echtzeitmechanismus betreffend die Priorisierung von Datenpaketen basierend auf TSN-Standards beruht beispielsweise auf den Standards IEEE 802.3, IEEE 802.1Qbu und IEEE 802.1Qbv. Der zweite Echtzeitmechanismus betreffend die Priorisierung von Datenpaketen basierend auf 5G-Standards beruht beispielsweise auf den 3GPP TS 23.501, Access Class Barring (ACB), Allocation and Retention Priority (ARP) usw.

Gemäß dem auf TSN-Standards basierenden ersten Echtzeitmechanismus kann die Priorisierung des Datenpakets auf Basis der MAC-Adresse und des VLAN-Tags (IEEE 802.3) festgelegt werden. Diese Felder dienen zwar primär anderen Zwecken, es ist jedoch ein Bezug von MAC-Adresse und VLAN-Tag zu einer konkreten Priorität zusätzlich konfiguriert. Entsprechend dieser Priorität können Pakete bevorzugt weitergeleitet werden (IEEE 802.1Qbu, IEEE 802.1Qbv).

Gemäß dem auf 5G-Standards basierenden zweiten Echtzeitmechanismus wird ein sog. 'Quality of Service Flow Identifier' (QFI) genutzt. Datenpakete mit dem gleichen QFI werden einheitlich behandelt und so priorisiert.

Durch das Abbildungsmodul 101 werden diese unterschiedlichen Echtzeitmechanismen aufeinander abgebildet. Zu diesem Zweck ist beispielsweise eine Tabelle definiert, die einer Priorität des 5G-QFI eine Priorität im TSN-Netz, repräsentiert durch Tupel von MAC-Adresse und VLAN-Tag, zuordnet.

Beim Übergang zwischen den beiden Kommunikationssystemen 111, 121 in dem Router 100, wenn also Datenpakete aus dem einen in das andere Kommunikationssystem übertragen werden sollen, wird diese Abbildung vollzogen. Dadurch wird die Priorität der Pakete mit übergeben.

Im vorliegenden Beispiel bildet das Abbildungsmodul 101 in Schritt 231 nun das Tupel von MAC-Adresse und VLAN-Tag des Datenpakets auf den entsprechenden QFI ab.

Ferner überträgt das Abbildungsmodul 101 in den Schritten 232 und 233 Einstellungen in dem ersten Netzwerk 110 gemäß dem ersten Echtzeitmechanismus auf das zweite Netzwerk 120 gemäß dem zweiten Echtzeitmechanismus, wie nachfolgend erläutert wird.

In Schritt 232 bildet das Abbildungsmodul 101 die Echtzeitmechanismen betreffend die Synchronisation von Netzwerkteilnehmern aufeinander ab.

Der auf TSN-Standards basierende erste Echtzeitmechanismus betreffend die Synchronisation beruht beispielsweise auf dem Standard IEEE 802.1AS. Der auf 5G-Standards basierende zweite Echtzeitmechanismus betreffend die Synchronisation beruht beispielsweise auf der sog. 'Physical Layer Synchronisation' sowie dem Standard IEEE 1588.

Insbesondere werden in den beiden Kommunikationssystemen, also in dem Feldbus 111 und dem 5G-Mobilfunknetz 121, jeweils Echtzeitmechanismen genutzt, die auf dem Standard IEEE 1588 basieren. Zusätzlich wird bei 5G noch eine feinere 'Physical Layer Synchronisation' genutzt, die zur genaueren Synchronisation mit TSN verwendet werden kann, wo wiederum auf Basis IEEE 1588 (siehe IEEE 802.1AS) eine genauere Synchronisation möglich ist als bei 5G nur mit IEEE 1588.

Insbesondere überträgt das Abbildungsmodul 101 in Schritt 232 nun die Zeitbasis des ersten Kommunikationssystems 111, also des Feldbusses 111, auf das 5G-Mobilfunknetz, also auf das zweite Kommunikationssystem 121. Insbesondere wird das erste Netzwerk 110 somit als ein Master betrachtet, dessen Einstellung auf das zweite Netzwerk 120 übertragen wird, welches als Slave fungiert.

In Schritt 233 bildet das Abbildungsmodul 101 die Echtzeitmechanismen betreffend die Allokation von Datenübertragungskapazitäten aufeinander ab.

Der auf TSN-Standards basierende erste Echtzeitmechanismus betreffend die Allokation beruht beispielsweise auf den Standards IEEE 802.3, IEEE 802.1Qbv, IEEE 802.1Qav und IEEE 802.1Qcc. Der auf 5G-Standards basierte zweite Echtzeitmechanismus betreffend die Allokation beruht beispielsweise auf 3GPP TS 23.501, Access Class Barring (ACB), Allocation and Retention Priority (ARP) usw.

Das Abbildungsmodul 101 überträgt nun in Schritt 233 die Allokationen, nämlich die Länge der Zeitschlitze und deren Reservierungen, von dem ersten Netzwerk 110, das als Master fungiert, auf das zweite Netzwerk 120, das als Slave fungiert.

In Schritt 240 wird das Datenpaket von dem Router 100 an das zweite Netzwerk 120 und schließlich an das entfernte Recheneinheitensystem 122 gemäß dem zweiten Echtzeitmechanismus übertragen.

Es sei an dieser Stelle angemerkt, dass eine Übertragung in umgekehrter Richtung, also von dem zweiten Netzwerk 120 in das erste Netzwerk, in entsprechender Weise durchgeführt wird, wobei das Abbildungsmodul 101 in diesem Fall den zweiten auf 5G-Standards basierenden Echtzeitmechanismus auf den ersten auf TSN-Standards basierenden Echtzeitmechanismus abbildet.

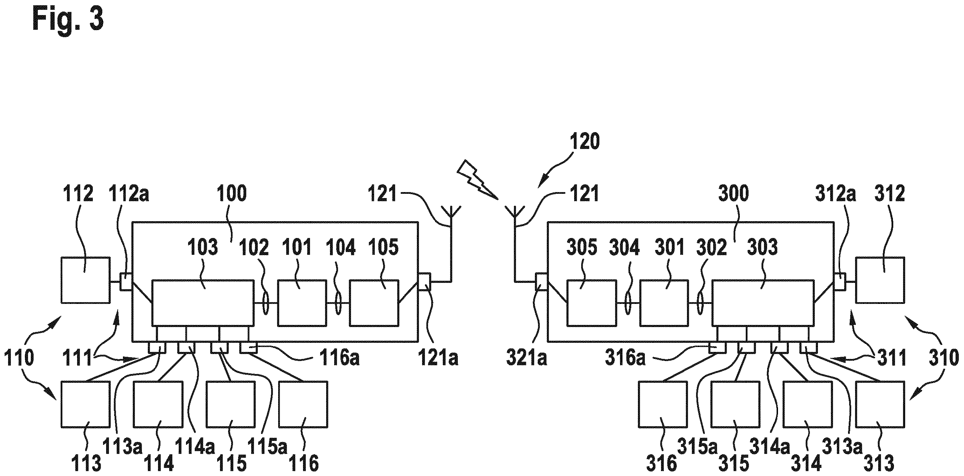

In Figur 3 ist schematisch gemäß einer bevorzugten Ausgestaltung der Erfindung ein System zur echtzeitfähigen Datenübertragung zwischen drei Netzwerken dargestellt. In den Figuren 1 und 3 bezeichnen identische Bezugszeichen gleiche Elemente.

Das in Figur 3 gezeigte Beispiel stellt eine Möglichkeit dar, um die Maschine aus Figur 1 über das Internet alternativ oder zusätzlich zu dem entfernten Recheneinheitensystem mit einer zweiten Maschine zu vernetzen, insbesondere im Zuge der "Industrie 4.0".

Analog zu Figur 1 sind dabei in dem ersten Netzwerk 110 Maschinenkomponenten der Maschine miteinander vernetzt, beispielsweise das Steuergerät 112, Aktoren 113, 114 und Sensoren 115, 116. Diese Maschinenkomponenten 112, 113, 114, 115, 116 sind in dem ersten Netzwerk 110 über das erste echtzeitfähige Kommunikationssystem 111 vernetzt, welches auf Ethernet, IEEE-Standards und ferner vorzugsweise auf TSN-Standards basiert und z.B. als ein auf Ethernet basierender echtzeitfähiger Feldbus ausgebildet ist, z.B. Sercos III, EtherCAT, Profinet, Ethernet/IP usw.

Über den Router 100 ist das erste Netzwerk 110 mit dem auf 5G-Standards basierenden und als 5G-Mobilfunknetz ausgebildeten zweiten Netzwerk 120 verbunden.

Analog zu obiger Beschreibung weist der Router 100 das Abbildungsmodul 101 sowie die Schnittstellen 102, 104, den TSN-Switch 103 und das 5G-Modem 105 auf.

Ferner ist in dem System eine weitere Maschine auf entsprechende Weist mit dem 5G-Mobilfunknetz, also dem zweiten Netzwerk 120 verbunden.

Analog zu der ersten Maschine kann auch diese zweite Maschine Komponenten wie ein Steuergerät 312, Aktoren 313, 314 und Sensoren 315, 316 umfassen, die in einem dritten Netzwerk 310 miteinander vernetzt sind. Es versteht sich, dass auch diese zweite Maschine noch weitere Komponenten aufweisen kann.

In dem dritten Netzwerk 310 sind diese Maschinenkomponenten 312, 313, 314, 315, 316 über ein echtzeitfähiges Kommunikationssystem 311 vernetzt, welches analog zu dem ersten Kommunikationssystem 111 auf Ethernet, IEEE-Standards und ferner vorzugsweise auf TSN-Standards basiert. Insbesondere können die echtzeitfähigen Kommunikationssysteme 111 und 311 identisch sein, beispielsweise kann derselbe Feldbus für die Kommunikationssysteme 111 und 311 verwendet werden.

Eine zweite bevorzugte Ausgestaltung einer erfindungsgemäßen Vorrichtung 300 ist vorgesehen, um das dritte Netzwerk 310 mit dem zweiten Netzwerk 120 zu verbinden. Analog zu dem Router 100 ist auch die Vorrichtung 300 als ein Router ausgebildet mit einem Abbildungsmodul 301, das dazu eingerichtet ist, den Echtzeitmechanismus des echtzeitfähigen Kommunikationssystems 311 und den Echtzeitmechanismus des zweiten echtzeitfähigen Kommunikationssystems 121 wechselseitig aufeinander abzubilden.

Ferner weist der Router 300 analog zu dem Router 100 entsprechende Schnittstellen 302, 304, einen TSN-Switch 303 und ein 5G-Modem 305 auf. An entsprechenden Anschlüssen bzw. Ports 312a, 313a, 314a, 315a und 316a des TSN-Switches 303 sind die Maschinenkomponenten 312, 313, 314, 315 und 316 angeschlossen. Über einen entsprechenden Anschluss bzw. Port 321a kann sich das Modem 305 mit dem 5G-Mobilfunknetz 120 verbinden.

Das System ermöglicht nun eine echtzeitfähige Datenübertragung von dem ersten Netzwerk 110 über das zweite Netzwerk 120 in das dritte Netzwerk 310 und umgekehrt. Beispielsweise können somit die Steuergeräte 112 und 312 in Echtzeit miteinander kommunizieren.

## Patentansprüche

1. Verfahren zur echtzeitfähigen Datenübertragung zwischen zwei Netzwerken (110, 120),
wobei in einem ersten Netzwerk (110) ein erstes echtzeitfähiges Kommunikationssystem (111) mit einem ersten Echtzeitmechanismus zur echtzeitfähigen Datenübertragung eingerichtet ist,
wobei in einem zweiten Netzwerk (120) ein zweites echtzeitfähiges Kommunikationssystem (121) mit einem zweiten Echtzeitmechanismus zur echtzeitfähigen Datenübertragung eingerichtet ist, wobei das erste Netzwerk (110) und das zweite Netzwerk (120) sowie der erste Echtzeitmechanismus und der zweite Echtzeitmechanismus jeweils voneinander verschieden sind,
wobei das erste Netzwerk (110) und das zweite Netzwerk (120) über ein Abbildungsmodul (101) miteinander verbunden sind, welches den ersten Echtzeitmechanismus des ersten echtzeitfähigen Kommunikationssystems (111) und den zweiten Echtzeitmechanismus des zweiten echtzeitfähigen Kommunikationssystems (121) wechselseitig aufeinander abbildet,
wobei zur echtzeitfähigen Datenübertragung von einem der beiden Netzwerke in das andere der beiden Netzwerke ein Datenpaket in dem einen der beiden Netzwerke (110) gemäß dem Echtzeitmechanismus des in diesem Netzwerk (110) eingerichteten echtzeitfähigen Kommunikationssystems (111) gesendet wird (220), das Abbildungsmodul (101) diesen Echtzeitmechanismus auf den Echtzeitmechanismus des in dem anderen der beiden Netzwerke (120) eingerichteten echtzeitfähigen Kommunikationssystems (121) abbildet (230) und das Datenpaket an das andere der beiden Netzwerke (120) gemäß dem Echtzeitmechanismus des in diesem Netzwerk eingerichteten echtzeitfähigen Kommunikationssystems (121) übertragen wird (240),
**dadurch gekennzeichnet, dass**
der erste Echtzeitmechanismus und der zweite Echtzeitmechanismus jeweils eine Allokation von Datenübertragungskapazitäten in Form von Länge und Reservierung von Zeitschlitzen betreffen.

2. Verfahren nach Anspruch 1, wobei der erste Echtzeitmechanismus und der zweite Echtzeitmechanismus ferner jeweils eine Priorisierung von Datenpaketen und/oder eine Synchronisation von Netzwerkteilnehmern betreffen.

3. Verfahren nach Anspruch 1 oder 2, wobei das Abbildungsmodul (101) zur echtzeitfähigen Datenübertragung von dem einen der beiden Netzwerke (110) in das andere der beiden Netzwerke (120) Einstellungen des in dem einen der beiden Netzwerke gesendeten Datenpakets gemäß dem Echtzeitmechanismus des in diesem Netzwerk (110) eingerichteten echtzeitfähigen Kommunikationssystems (111) in Einstellungen gemäß dem Echtzeitmechanismus des in dem anderen der beiden Netzwerke (120) eingerichteten echtzeitfähigen Kommunikationssystems (121) abbildet (231).

4. Verfahren nach einem der vorstehenden Ansprüche, wobei das Abbildungsmodul zur echtzeitfähigen Datenübertragung von dem einen der beiden Netzwerke (110) in das andere der beiden Netzwerke (120) Einstellungen in dem einen der beiden Netzwerke (110) gemäß dem Echtzeitmechanismus des in diesem Netzwerk (110) eingerichteten echtzeitfähigen Kommunikationssystems (111) auf das andere der beiden Netzwerke (120) gemäß dem Echtzeitmechanismus des in diesem Netzwerk (120) eingerichteten echtzeitfähigen Kommunikationssystems (121) überträgt (232, 233).

5. Verfahren nach einem der vorstehenden Ansprüche, wobei
das erste Netzwerk (110) über eine erste Schnittstelle (102) mit dem Abbildungsmodul (101) verbunden ist, wobei das Abbildungsmodul (101) über die erste Schnittstelle (102) Einstellungen gemäß dem ersten Echtzeitmechanismus einlesen und ausgeben kann und/oder
das zweite Netzwerk (120) über eine zweite Schnittstelle (104) mit dem Abbildungsmodul (101) verbunden ist, wobei das Abbildungsmodul (101) über die zweite Schnittstelle (104) Einstellungen gemäß dem zweiten Echtzeitmechanismus einlesen und ausgeben kann.

6. Verfahren nach einem der vorstehenden Ansprüche, wobei das erste echtzeitfähige Kommunikationssystem (111) und/oder das zweite echtzeitfähige Kommunikationssystem (121) auf Ethernet und/oder auf IEEE802-Standards und/oder auf TSN-Standards basiert.

7. Verfahren nach einem der vorstehenden Ansprüche, wobei das erste echtzeitfähige Kommunikationssystem (111) und/oder das zweite echtzeitfähige Kommunikationssystem (121) ein echtzeitfähiges Mobilfunknetz ist und/oder auf 5G-Standards basiert.

8. Verfahren nach einem der vorstehenden Ansprüche, wobei das Abbildungsmodul (101) den ersten Echtzeitmechanismus basierend auf TSN-Standards und den zweiten Echtzeitmechanismus basierend auf 5G-Standards wechselseitig aufeinander abbildet.

9. Vorrichtung (100) zur echtzeitfähigen Datenübertragung zwischen zwei Netzwerken (110, 120), die dazu eingerichtet ist, ein Verfahren nach einem der vorstehenden Ansprüche durchzuführen, aufweisend
eine erste Schnittstelle (102), die dazu eingerichtet ist, mit einem ersten Netzwerk (110) verbunden zu werden, in welchem ein erstes echtzeitfähiges Kommunikationssystem (111) mit einem ersten Echtzeitmechanismus zur echtzeitfähigen Datenübertragung eingerichtet ist,
eine zweite Schnittstelle (104), die dazu eingerichtet ist, mit einem zweiten Netzwerk (120) verbunden zu werden, in welchem ein zweites echtzeitfähiges Kommunikationssystem (121) mit einem zweiten Echtzeitmechanismus zur echtzeitfähigen Datenübertragung eingerichtet ist, wobei das erste Netzwerk (110) und das zweite Netzwerk (120) sowie der erste Echtzeitmechanismus und der zweite Echtzeitmechanismus jeweils voneinander verschieden sind, und
ein Abbildungsmodul (101), das dazu eingerichtet ist, den ersten Echtzeitmechanismus des ersten echtzeitfähigen Kommunikationssystems (111) und den zweiten Echtzeitmechanismus des zweiten echtzeitfähigen Kommunikationssystems (121) wechselseitig aufeinander abzubilden,
**dadurch gekennzeichnet, dass**
der erste Echtzeitmechanismus und der zweite Echtzeitmechanismus jeweils eine Allokation von Datenübertragungskapazitäten in Form von Länge und Reservierung von Zeitschlitzen betreffen.

10. Vorrichtung (100) nach Anspruch 9, wobei
die erste Schnittstelle (102) dazu eingerichtet ist, dass das Abbildungsmodul (101) Einstellungen gemäß dem ersten Echtzeitmechanismus einlesen und ausgeben kann und/oder
wobei die zweite Schnittstelle (104) dazu eingerichtet ist, dass das Abbildungsmodul (101) Einstellungen gemäß dem zweiten Echtzeitmechanismus einlesen und ausgeben kann.

11. Vorrichtung (100) nach Anspruch 9 oder 10, wobei das Abbildungsmodul (101) dazu eingerichtet ist, den ersten Echtzeitmechanismus basierend auf TSN-Standards und den zweiten Echtzeitmechanismus basierend auf 5G-Standards wechselseitig aufeinander abzubilden.

12. System zur echtzeitfähigen Datenübertragung aufweisend
ein erstes Netzwerk (110) mit wenigstens einem ersten Netzwerkteilnehmer (112, 113, 114, 115), wobei in dem ersten Netzwerk (110) ein erstes echtzeitfähiges Kommunikationssystem (111) mit einem ersten Echtzeitmechanismus zur echtzeitfähigen Datenübertragung eingerichtet ist,
ein zweites Netzwerk (120) mit wenigstens einem zweiten Netzwerkteilnehmer (122), wobei in dem zweiten Netzwerk (120) ein zweites echtzeitfähiges Kommunikationssystem (121) mit einem zweiten Echtzeitmechanismus zur echtzeitfähigen Datenübertragung eingerichtet ist, wobei das erste Netzwerk (110) und das zweite Netzwerk (120) sowie der erste Echtzeitmechanismus und der zweite Echtzeitmechanismus jeweils voneinander verschieden sind,
eine Vorrichtung (100) gemäß einem der Ansprüche 9 bis 11, mittels welcher das erste Netzwerk (110) und das zweite Netzwerk (120) miteinander verbunden sind,
**dadurch gekennzeichnet, dass**
der erste Echtzeitmechanismus und der zweite Echtzeitmechanismus jeweils eine Allokation von Datenübertragungskapazitäten in Form von Länge und Reservierung von Zeitschlitzen betreffen.

13. Das System nach Anspruch 12, ferner aufweisend
ein drittes Netzwerk (310), in welchem das erste echtzeitfähige Kommunikationssystem (311) mit dem ersten Echtzeitmechanismus zur echtzeitfähigen Datenübertragung oder ein drittes echtzeitfähiges Kommunikationssystem mit einem dritten Echtzeitmechanismus zur echtzeitfähigen Datenübertragung eingerichtet ist,
eine erste Vorrichtung (100) gemäß einem der Ansprüche 9 bis 11, mittels welcher das erste Netzwerk (110) und das zweite Netzwerk (120) miteinander verbunden sind, und
eine zweite Vorrichtung (300) gemäß einem der Ansprüche 9 bis 11, mittels welcher das zweite Netzwerk (120) und das dritte Netzwerk (310) miteinander verbunden sind.

14. Computerprogramm, das eine Recheneinheit veranlasst, ein Verfahren nach einem der Ansprüche 1 bis 8 durchzuführen, wenn es auf der Recheneinheit ausgeführt wird.

15. Maschinenlesbares Speichermedium mit einem darauf gespeicherten Computerprogramm nach Anspruch 14.

## Claims

1. Method for real-time-capable data transmission between two networks (110, 120),
wherein a first real-time-capable communication system (111) having a first real-time mechanism for real-time-capable data transmission is set up in a first network (110),
wherein a second real-time-capable communication system (121) having a second real-time mechanism for real-time-capable data transmission is set up in a second network (120), wherein the first network (110) and the second network (120) as well as the first real-time mechanism and the second real-time mechanism are each different from one another,
wherein the first network (110) and the second network (120) are connected to one another via a mapping module (101) which reciprocally maps the first real-time mechanism of the first real-time-capable communication system (111) and the second real-time mechanism of the second real-time-capable communication system (121) to one another,
wherein, for real-time-capable data transmission from one of the two networks to the other of the two networks, a data packet is transmitted (220) in one of the two networks (110) according to the real-time mechanism of the real-time-capable communication system (111) set up in said network (110), the mapping module (101) maps (230) this real-time mechanism to the real-time mechanism of the real-time-capable communication system (121) set up in the other of the two networks (120), and the data packet is transmitted (240) to the other of the two networks (120) according to the real-time mechanism of the real-time-capable communication system (121) set up in said network,
**characterized in that**
the first real-time mechanism and the second real-time mechanism each relate to allocation of data transmission capacities in the form of length and reservation of time slots.

2. Method according to Claim 1, wherein the first real-time mechanism and the second real-time mechanism each also relate to prioritization of data packets and/or synchronization of network subscribers.

3. Method according to Claim 1 or 2, wherein, for real-time-capable data transmission from one of the two networks (110) to the other of the two networks (120), the mapping module (101) maps (231) settings of the data packet transmitted in one of the two networks according to the real-time mechanism of the real-time-capable communication system (111) set up in said network (110) to settings according to the real-time mechanism of the real-time-capable communication system (121) set up in the other of the two networks (120).

4. Method according to one of the preceding claims, wherein, for real-time-capable data transmission from one of the two networks (110) to the other of the two networks (120), the mapping module transfers (232, 233) settings in one of the two networks (110) according to the real-time mechanism of the real-time-capable communication system (111) set up in said network (110) to the other of the two networks (120) according to the real-time mechanism of the real-time-capable communication system (121) set up in said network (120).

5. Method according to one of the preceding claims, wherein
the first network (110) is connected to the mapping module (101) via a first interface (102), wherein the mapping module (101) can read in and output settings according to the first real-time mechanism via the first interface (102), and/or
the second network (120) is connected to the mapping module (101) via a second interface (104), wherein the mapping module (101) can read in and output settings according to the second real-time mechanism via the second interface (104).

6. Method according to one of the preceding claims, wherein the first real-time-capable communication system (111) and/or the second real-time-capable communication system (121) is/are based on Ethernet and/or on IEEE 802 standards and/or on TSN standards.

7. Method according to one of the preceding claims, wherein the first real-time-capable communication system (111) and/or the second real-time-capable communication system (121) is/are a real-time-capable mobile radio network and/or is/are based on 5G standards.

8. Method according to one of the preceding claims, wherein the mapping module (101) reciprocally maps the first real-time mechanism based on TSN standards and the second real-time mechanism based on 5G standards to one another.

9. Apparatus (100) for real-time-capable data transmission between two networks (110, 120), which apparatus is set up to carry out a method according to one of the preceding claims, having
a first interface (102) which is set up to be connected to a first network (110) in which a first real-time-capable communication system (111) having a first real-time mechanism for real-time-capable data transmission is set up,
a second interface (104) which is set up to be connected to a second network (120) in which a second real-time-capable communication system (121) having a second real-time mechanism for real-time-capable data transmission is set up, wherein the first network (110) and the second network (120) as well as the first real-time mechanism and the second real-time mechanism are each different from one another, and
a mapping module (101) which is set up to reciprocally map the first real-time mechanism of the first real-time-capable communication system (111) and the second real-time mechanism of the second real-time-capable communication system (121) to one another,
**characterized in that**
the first real-time mechanism and the second real-time mechanism each relate to allocation of data transmission capacities in the form of length and reservation of time slots.

10. Apparatus (100) according to Claim 9, wherein
the first interface (102) is set up such that the mapping module (101) can read in and output settings according to the first real-time mechanism, and/or
wherein the second interface (104) is set up such that the mapping module (101) can read in and output settings according to the second real-time mechanism.

11. Apparatus (100) according to Claim 9 or 10, wherein the mapping module (101) is set up to reciprocally map the first real-time mechanism based on TSN standards and the second real-time mechanism based on 5G standards to one another.

12. System for real-time-capable data transmission, having
a first network (110) having at least one first network subscriber (112, 113, 114, 115), wherein a first real-time-capable communication system (111) having a first real-time mechanism for real-time-capable data transmission is set up in the first network (110),
a second network (120) having at least one second network subscriber (122), wherein a second real-time-capable communication system (121) having a second real-time mechanism for real-time-capable data transmission is set up in the second network (120), wherein the first network (110) and the second network (120) as well as the first real-time mechanism and the second real-time mechanism are each different from one another,
an apparatus (100) according to one of Claims 9 to 11 which is used to connect the first network (110) and the second network (120) to one another,
**characterized in that**
the first real-time mechanism and the second real-time mechanism each relate to allocation of data transmission capacities in the form of length and reservation of time slots.

13. System according to Claim 12, also having
a third network (310) in which the first real-time-capable communication system (311) having the first real-time mechanism for real-time-capable data transmission or a third real-time-capable communication system having a third real-time mechanism for real-time-capable data transmission is set up,
a first apparatus (100) according to one of Claims 9 to 11 which is used to connect the first network (110) and the second network (120) to one another, and
a second apparatus (300) according to one of Claims 9 to 11 which is used to connect the second network (120) and the third network (310) to one another.

14. Computer program which causes a computing unit to carry out a method according to one of Claims 1 to 8 when it is executed on the computing unit.

15. Machine-readable storage medium having computer program according to Claim 14 stored thereon.

## Revendications

1. Procédé de transmission de données en temps réel entre deux réseaux (110, 120),
un premier système de communication en temps réel (111) étant pourvu d'un premier mécanisme en temps réel destiné à la transmission de données en temps réel dans un premier réseau (110),
un deuxième système de communication en temps réel (121) étant pourvu d'un deuxième mécanisme en temps réel destiné à la transmission de données en temps réel dans un deuxième réseau (120), le premier réseau (110) et le deuxième réseau (120) ainsi que le premier mécanisme en temps réel et le deuxième mécanisme en temps réel étant différents l'un de l'autre,
le premier réseau (110) et le deuxième réseau (120) étant reliés l'un à l'autre par le biais d'un module d'application (101) qui établit une application réciproque entre le premier mécanisme en temps réel du premier système de communication en temps réel (111) et le deuxième mécanisme en temps réel du deuxième système de communication en temps réel (121),
pour effectuer la transmission de données en temps réel de l'un des deux réseaux à l'autre des deux réseaux, un paquet de données étant envoyé (220) dans l'un des deux réseaux (110) suivant le mécanisme en temps réel du système de communication en temps réel (111) prévu dans ce réseau (110), le module d'application (101) réalisant une application (230) de ce mécanisme en temps réel au mécanisme en temps réel du système de communication en temps réel (121) prévu dans l'autre des deux réseaux (120) et le paquet de données étant transmis (240) à l'autre des deux réseaux (120) suivant le mécanisme en temps réel du système de communication en temps réel prévu dans ce réseau (121),
**caractérisé en ce que**
le premier mécanisme en temps réel et le deuxième mécanisme en temps réel concernent chacun une allocation de capacités de transmission de données sous forme de longueur et de réservation de créneaux temporels.

2. Procédé selon la revendication 1, **caractérisé en ce que** le premier mécanisme en temps réel et le deuxième mécanisme en temps réel concernent également chacun une priorisation de paquets de données et/ou une synchronisation de périphériques de réseau.

3. Procédé selon la revendication 1 ou 2, le module d'application (101) destiné à la transmission de données en temps réel de l'un des deux réseaux (110) à l'autre des deux réseaux (120) réalisant une application (231) des réglages du paquet de données, envoyé dans l'un des deux réseaux suivant le mécanisme en temps réel du système de communication en temps réel (111) prévu dans ce réseau (110), aux réglages suivant le mécanisme en temps réel du système de communication en temps réel (121) prévu dans l'autre des deux réseaux (120).

4. Procédé selon l'une des revendications précédentes, le module d'application destiné à la transmission de données en temps réel de l'un des deux réseaux (110) vers l'autre des deux réseaux (120) transmettant (232, 233) des réglages dans l'un des deux réseaux (110) suivant le mécanisme en temps réel dans le système de communication en temps réel (111) prévu dans ce réseau (110) à l'autre des deux réseaux (120) suivant le mécanisme en temps réel du système de communication de temps réel (121) prévu dans ce réseau (120).

5. Procédé selon l'une des revendications précédentes,
le premier réseau (110) étant relié au module d'application (101) par le biais d'une première interface (102), le module d'application (101) pouvant lire et délivrer des réglages suivant le premier mécanisme en temps réel par le biais de la première interface (102) et/ou
le deuxième réseau (120) étant relié au module d'application (101) par le biais d'une deuxième interface (104), le module d'application (101) pouvant lire et délivrer des réglages suivant le deuxième mécanisme en temps réel par le biais de la deuxième interface (104).

6. Procédé selon l'une des revendications précédentes, le premier système de communication en temps réel (111) et/ou le deuxième système de communication en temps réel (121) étant basés sur Ethernet et/ou des normes IEEE802 et/ou des normes TSN.

7. Procédé selon l'une des revendications précédentes, le premier système de communication en temps réel (111) et/ou le deuxième système de communication en temps réel (121) étant un réseau mobile en temps réel et/ou étant basés sur les normes 5G.

8. Procédé selon l'une des revendications précédentes, le module d'application (101) réalisant une application réciproque entre le premier mécanisme en temps réel basé sur les normes TSN et le deuxième mécanisme en temps réel basé sur les normes 5G.

9. Dispositif (100) de transmission de données en temps réel entre deux réseaux (110, 120), qui sont prévus pour mettre en œuvre un procédé selon l'une des revendications précédentes, ledit dispositif comportant
une première interface (102) qui est prévue pour être reliée à un premier réseau (110) dans lequel un premier système de communication en temps réel (111) est pourvu d'un premier mécanisme en temps réel destiné à la transmission de données en temps réel,
une deuxième interface (104) qui est prévue pour être reliée à un deuxième réseau (120) dans lequel un deuxième système de communication en temps réel (121) est pourvu d'un deuxième mécanisme en temps réel destiné à la transmission de données en temps réel, le premier réseau (110) et le deuxième réseau (120) ainsi que le premier mécanisme en temps réel et le deuxième mécanisme en temps réel étant respectivement différents l'un de l'autre, et
un module d'application (101) qui est prévu pour réaliser une application réciproque entre le premier mécanisme en temps réel du premier système de communication en temps réel (111) et le deuxième mécanisme en temps réel du deuxième système de communication en temps réel (121),
**caractérisé en ce que**
le premier mécanisme en temps réel et le deuxième mécanisme en temps réel concernent chacun une allocation de capacités de transmission de données sous forme de longueur et de réservation de créneaux temporels.

10. Dispositif (100) selon la revendication 9,
la première interface (102) étant prévue pour que le module d'application (101) puisse lire et délivrer des réglages suivant le premier mécanisme en temps réel et/ou
la deuxième interface (104) étant prévue pour que le module d'application (101) puisse lire et délivrer des réglages suivant le deuxième mécanisme en temps réel.

11. Dispositif (100) selon la revendication 9 ou 10, le module d'application (101) étant prévu pour réaliser une application réciproque entre le premier mécanisme en temps réel basé sur les normes TSN et le deuxième mécanisme en temps réel basé sur les normes 5G.

12. Système de transmission de données en temps réel comportant
un premier réseau (110) comprenant au moins un premier périphérique de réseau (112, 113, 114, 115), un premier système de communication en temps réel (111) étant pourvu d'un premier mécanisme en temps réel destiné à la transmission de données en temps réel dans le premier réseau (110),
un deuxième réseau (120) comprenant au moins un deuxième périphérique de réseau (122), un deuxième système de communication en temps réel (121) étant pourvu d'un deuxième mécanisme en temps réel destiné à une transmission de données en temps réel dans le deuxième réseau (120), le premier réseau (110) et le deuxième réseau (120) ainsi que le premier mécanisme en temps réel et le deuxième mécanisme en temps réel étant respectivement différents l'un de l'autre,
un dispositif (100) selon l'une des revendications 9 à 11 au moyen duquel le premier réseau (110) et le deuxième réseau (120) sont connectés l'un à l'autre,
**caractérisé en ce que**
le premier mécanisme en temps réel et le deuxième mécanisme en temps réel concernent chacun une allocation de capacités de transmission de données sous forme de longueur et de réservation de créneaux temporels.

13. Système selon la revendication 12, comprenant en outre
un troisième réseau (310) dans lequel le premier système de communication en temps réel (311) est pourvu du premier mécanisme en temps réel destiné à la transmission de données en temps réel ou un troisième système de communication en temps réel est pourvu d'un troisième mécanisme en temps réel destiné à la transmission de données en temps réel,
un premier dispositif (100) selon l'une des revendications 9 à 11 au moyen duquel le premier réseau (110) et le deuxième réseau (120) sont reliés l'un à l'autre, et
un deuxième dispositif (300) selon l'une des revendications 9 à 11 au moyen duquel le deuxième réseau (120) et le troisième réseau (310) sont reliés l'un à l'autre.

14. Logiciel qui ordonne à une unité informatique de mettre en œuvre un procédé selon l'une des revendications 1 à 8 lorsqu'il est exécuté sur l'unité informatique.

15. Support de stockage lisible par machine comprenant un logiciel selon la revendication 14 stocké dessus.
